(19) Europäisches Patentamt
European Patent Office
Office européen des brevets

(11) **EP 1 130 981 B1**

(12) **EUROPEAN PATENT SPECIFICATION**

(45) Date of publication and mention
of the grant of the patent:
**08.06.2005 Bulletin 2005/23**

(51) Int Cl.⁷: **A23L 2/44**, A23L 2/84,
C12C 5/02

(21) Application number: **98960938.3**

(22) Date of filing: **19.11.1998**

(86) International application number:
**PCT/BR1998/000094**

(87) International publication number:
**WO 2000/030479 (02.06.2000 Gazette 2000/22)**

(54) **PROCESS FOR INTRODUCTION OF ADDITIVES ASSOCIATED WITH A SPECIAL TREATMENT FOR BEVERAGE PACKAGING IN PLASTIC CONTAINERS**

VERFAHREN ZUR ZUGABE VON ZUSATZSTOFFEN UND ZUR BEHANDLUNG VON GETRÄNKEN,WELCHE IN PLASTIKBEHÄLTERN VERPACKT SIND

PROCEDE D'INTRODUCTION D'ADDITIFS ASSOCIE A UN TRAITEMENT SPECIAL DES EMBALLAGES A BOISSON CONTENUE DANS UN RECIPIENT EN PLASTIQUE

(84) Designated Contracting States:
**DE DK ES FR GB IT**

(43) Date of publication of application:
**12.09.2001 Bulletin 2001/37**

(73) Proprietor: **Rhodia-Ster S.A.**
**Sao Paulo, CEP 04578-905 (BR)**

(72) Inventor: **MORETTI, Roberto Herminio**
**Campinas CEP-Sao Paulo, SP (BR)**

(74) Representative: **Gerbino, Angelo**
**Jacobacci & Partners S.p.A.**
**Corso Emilia, 8**
**10152 Torino (IT)**

(56) References cited:
WO-A-88/05992          US-A- 4 957 749

- **DATABASE WPI Section Ch, Week 9906 Derwent Publications Ltd., London, GB; Class A92, AN 99-060861 XP002110622 & BR 9 700 569 A (RHODIA-STER SA), 22 December 1998 (1998-12-22)**
- **DATABASE FSTA [Online] INTERNATIONAL FOOD INFORMATION SERVICE (IFIS), FRANFURT/MAIN, DE AN 76-4-06-t0275, LEVINA L SH ET AL.: "Method of using glucose oxidase as a food antioxidant. " XP002110619**
- **DATABASE FSTA [Online] INTERNATIONAL FOOD INFORMATION SERVICE (IFIS), FRANFURT/MAIN, DE AN 69-3-03-h0292, POKROVSKAYA N V ET AL.: "Alcoholic & non-alcoholic beverages" XP002110620**
- **DATABASE FSTA [Online] INTERNATIONAL FOOD INFORMATION SERVICE (IFIS), FRANFURT/MAIN, DE AN 72-1-07-h0993, PARTSHKO V G ET AL.: "Stabilization of apple and morello cherry juice by glucose oxidase and sorbic acid" XP002110621**
- **DATABASE WPI Section Ch, Week 9906 Derwent Publications Ltd., London, GB; Class A92, AN 99-060854 XP002110623 & BR 9 700 132 A (RHODIA-STER SA), 22 December 1998 (1998-12-22)**

**Description**

The invention refers to the process for introduction of a composition containing additives and coadjuvants and a special thermal treatment for chemical, physical, microbiological and sensory preservation of beverages in plastic containers. Beverages may be alcoholic or not, fermented or not, carbonated or not. As example we can mention: fruit juice, beer, draft beer, wine, soft drinks, isotonic beverages, etc.

The present invention consists of the introduction of an enzymatic complex and a group of chemical preservatives associated with a special thermal treatment into beers and other types of beverages through dosing pumps, before the product's packaging (immediately after the final filtration, for example). This process has the objective of solving two problems at the same time, problems which limit the packaging of such products into plastic containers: a) the high oxygen-permeability and b) the lower mechanical resistance in pasteurization temperatures, characteristics normally presented by this type of container.

As plastic containers we can mention: PET bottles, PET multilayer bottles, PEN bottles, homopolymer or copolymer-based, PET/PEN blends or any other permeable plastic container.

In the case of fermented beverages production, especially beers, containers used are: the traditional glass bottle and metallic cans. The commercial use of plastic recipients for such application still presents some problems.

Plastic recipients are not commercially used in a large scale, since they present two main problems: high oxygen-permeability and low thermo-resistance. The first problem causes the beverage accelerated oxidation, reducing its shelf-life, while its low heat resistance prevents the conventional pasteurization of the beverage inside it or the product's packaging when it is still hot. With the objective of solving these problems, a process has been developed consisting in the introduction of a formulation containing the enzymatic complex, preservatives and other food additives.

This process became possible due to the existence of a synergistic effect between the additives formulation and the non usual thermal treatment. With the present invention, the treatment (those under a tunnel as those under heat exchanger) could be very mild without compromise the product's sensorial stability.

Plastic containers are oxygen-permeanle, for example, in the case of a beer packed in PET type bottles of 500 ml, a permeability of 0.01 to 1.4 $cm^3$/oxygen/day. The glucose-oxidase/catalase enzymatic complex, in example, addition to beer soon after final filtration catalyzes chemical reactions which shall consume the oxygen permeated throughout all its shelf-life, which is 2 to 6 months, depending on the sale strategy adopted by the brewer. This occurs, only with a precise and adequate control of the involved variables in the process of the oxygen elimination from the containers and under certain conditions.

Beers presently packed in plastic containers are not capable of maintaining their sensory and physico-chemical and microbiological stability characteristics during the normal shelf-life (between 2 and 6 months, at room temperature).

With this invention, some advantages shall be achieved by the beer industry:

1) The plastic container is much lighter than the glass bottle, resulting in transport and storage savings;
2) The plastic container is resistant to pressures superior to those supported by aluminium cans' ;
3) The plastic container is much more resistant to mechanical action than the glass bottle, preventing losses and damages due to breakage in processing line and during distribution;
4) Through utilisation of the same equipment used in example for "long neck" type beer packaging, which volume is of 355 ml, the following can be packed: 500, 600 or even 1000 ml beer volume in plastic containers which dimensions (diameter and height) are much near to those of glass;
5) The plastic container is delivered to the beer manufacturer in preforms, occupying a much smaller volume than the aluminium cans which are manufactured in a location distant from the breweries. Preforms delivered are then blown in a machine installed in the client's factory. The beer manufacturer could also receive the resin which shall be transformed into container with the help of an injection and blow machine installed in the beer factory itself. By This way, much smaller volumes are transported and much less space is occupied in storage, thus obtaining a great reduction in the unit cost of containers.

As mentioned in the article "Practical Experiences of Packaging Beer in PET Bottles", by Iain D. M. Oag and Timothy J. B. Webb, plastic containers are used for beer packaging in the English market, since 1982. However, due to the high oxygen-permeability of monolayer PET bottles, only a 2-3-weeks shelf-life is giving to them, studies have been developed on the product's stability in PET bottles recovered with a PVDC layer-barrier to increase this shelf-life.

In comparison to aluminium cans and glass bottles which present around 36-weeks shelf-life, the beer packed in PET bottle recovered with PVDC, maintains its original characteristics for around 20 weeks. However, the high costs of such type of container make this solution commercially less competitive, when compared with the use of traditional PET containers.

As mentioned in the article " PET Bottle Prime Contender in Japan's Beer Packaging War", by Yoshiro Miki, Kirin Brewery Co., Ltd., Tokyo, Japan, due to the increase in beer consumption in Japan, the preference for one-way bottles, easy to carry and to dispose of, has also increased. Although the performance obtained as to the gas barrier properties is worse, the interest in the use of PET in the packaging of beverages is due to the easiness to obtain bottles of several forms and sizes and also, because they are a novelty. In this case, the cost of the final product packed in PET type containers is higher due to the lower shelf-life, thus making beer less competitive.

As mentioned in the article "Australian Brewer Test Markets PET Beer Bottles", Packaging Strategies, December 15, 1996, an Australian company launched in the market the filtered beer cold-packed in monolayer PET bottles of 500 ml. Due to the fact that PET is not efficient as gas barrier, the beer has its original characteristics preserved during 50 days only, and besides that, it must be commercialized under refrigeration.

The microbiological stability may be traditionally achieved from several forms:

(1) tunnel pasteurization (thermal treatment inside the final container);
(2) "flash" pasteurization in heat exchangers before beverage packaging;
(3) sterile filtration (0.45 micra) capable of retaining microorganisms which might be present in the beverage;
(4) continuous refrigeration and
(5) addition of stabilizers.

As mentioned in the article " Economies of a New Microbiological Stabilizer", by Dr. John B. Bockelmann, Tenafly, N.J., (1) the Pasteurization Tunnel is considered an old-fashioned heating process, having a successful background and being widely used by brewers. The disadvantage of such a process is the fact that the use of heat provides a faster deterioration of the sensory characteristics. The cost of the equipment is high, and its size requires the use of large areas, besides requiring large quantities of steam and water.

In comparison with the tunnel pasteurization, in the (2) "Flash" Pasteurization, there is a reduction in cost and in building space. The speed in flavour deterioration along the time is significantly reduced, once the product remains hot for short time. Lighter weight containers can be used due to lower pressures obtained by the cold process. The cost of this system is quite high, since the pack's filling and sealing requires the use of aseptic systems. Provided that only the product beer is being pasteurized, the probability of recontamination during the filling and sealing phase is very high. Due to the fact that packaging is effected at low temperatures, a water condensation on the container may occur, causing a subsequent damage to labels and cards. Technically qualified persons are needed to operate the equipment, to maintain the asepsis and to control the microbiological quality of the system, in order to achieve a reasonable commercial biological stability.

The equipment used in (3) the Sterile Filtration is compact, the space being used in a rational manner. Once the heating phase of the product is eliminated, there is a better flavour quality. It represents a high cost method, because the use of the filling and sealing aseptic system is essential, in order to avoid an eventual recontamination of the product. In this case the beer can loose body (flavour) due to losses of high molecular weight components in the pod filters.

The (4) Continuous Refrigeration, when carried out accordingly, prevents the multiplication of microorganisms. It has the advantage of being stored at low temperatures, thus maintaining the freshness and quality characteristics of the product. The system is quite expensive, because the costs for the construction of cold rooms, acquisition of refrigeration equipment and refrigerated trucks are quite high. The water condensation of the product during commercialization may cause considerable damage to its presentation, therefore requiring the product's repackaging. It is necessary to inform the consumer as to the product's storage under refrigeration conditions. It is essential that an intensive monitoring be maintained to assure the product's proper refrigeration and protection.

The (5) Direct Addition of Stabilizer does not require the use of additional equipment in the plant, thus allowing space saving and rational utilization. The product is protected before and after packaging, so that the use of aseptic systems is not necessary. With the use of heptylparaben, there are some alterations in the body and stability, besides the product's clouding. The flavour is substantially modified when usual levels of additives is used in the beer. If less flavour alterations are aimed, microbiological stability is lost. The use of propylene glycol alginate compensates such deficiencies at an additional cost. The use of P.H.M.B. (biguanide poly-hexamethylen hypochlorite) does not unchain such problems. The usage of heptylparaben requires attention due to its low and beer solubility, while with P. H.M.B such problem does not occur.

In conclusion, the use of biological stabilizers together with a direct additive in the product has more advantages over the other four alternatives. This system is easily controlled, protecting the product as from its addition during the process until the final consumer. Comparatively, the costs are lower. Due to the high potential of this method, studies have been carried out in order to find a stabilizer which would supply heptylparaben's deficiencies, maintaining the product's original properties.

The beer is a complex system, extremely sensitive oxidation. Together with the influence of external factors, such as temperature, light and shaking, over the organoleptic stability of the packed beer, the presence of oxygen causes, among other factors, the formation of carbonyl links, conferring "oxidation taste" (aging), the oxidation of the aromatic substances of the lupulus, as well as the beer darkening.

In order to keep organoleptic stability, in which the oxygen plays an important role, an enzymatic complex can be added with the objective of consuming the oxygen and which permeates through the walls or through the closing system. Such enzymatic complex contains, at least, five enzymes, of which the glucose-oxidase and catalase activity is important. The glucose-oxidase catalyses the reaction of the oxygen with glucose, forming gluconic acid and the hydrogen peroxide that is later consumed by catalase, forming water and half the original oxygen. These two are chain reactions which occur until the total consumption of the oxygen. During the shelf-life, the oxygen penetrating through the plastic container walls shall also be consumed by the same process.

$$\text{Glucose} + O_2 + H_2O \xrightarrow{\text{glucose oxidase}} \text{Gluconic acid} + H_2O_2$$

$$H_2O_2 \xrightarrow{\text{catalase}} 1/2\ O_2 + H_2O$$

In general, a quantity of I to 100 ppm of enzyme is employed, sufficient to consume the oxygen which has permeated through a polyethylene tereftalate bottle, based on the principle that, through a 500 ml polyethylene tereftalate container there is permeation of 0.03 $cm^3$/container/day. Glucose oxidase may be produced by *Aspergillus niger*. Its substrac is constituted by glucose, together or not with other sugars such as: lactose, raffinose, fructose, saccharose, galactose, maltose and water. Its optimum pH of activity is lower than 5.0. The enzyme complex is added to beer before thermal treatment.

The U.S. patent 5,010,007 describes that the enzymatic complex used in the process may comprise an oxidase and the substratum thereof, catalase and superoxide dismutase. The use of these three enzymes generates a synergistic effect in relation to the antioxidant properties thereof. In fact, the use of such enzymes separately provides inconclusive results.

The use of preservatives for microbiological preservation of beverages is well-known by the state-of-the-art. Due to the need of applying a high dosage of sorbic or benzoic acid, a widely used preservative, preservatives synergistically used and dosed in quite lower quantities are being used, since they are more efficient.

Document Kharchova Promislovist (Respublikans'kii Mizhvidomchii Naukovotekhnichnii Zbimik) 1973 & FSTA abstract AN 76-4-06-(0275) relates to a method of using glucose oxidase as a food antioxidant.

As mentioned in the article " New Technique for the Cold Sterilization of Beer, by J. A. Kozulis; P. D. Bayne and J. Cuzner, Milwaukee, Wis.", the n-heptyl p-hydroxibenzoate, a member of the paraben family, was the first cold stabilizer to be used by the beer industry in the United States. This composition has an optimum antimicrobial activity at low concentrations. However, it causes an influence on the beer's superficial tension, causing a reduction in the foam's stability. The n-heptyl p-hydroxibenzoate when used on levels exceeding its solubility limit in beer, may cause a clouding effect in the final product besides changing significantly its flavour.

With the objective of solving the above mentioned problems, a new formulation has been developed to be used in the preservation of beverages.

The formulation developed by the Applicant is characterized by comprising in its composition: (A) one or more enzymatic complexes; (B) one or more preservative agents and optionally, (C) other food additives and a special thermal treatment.

The main function of the enzymatic complex (A) is the catalysis of reactions consuming the oxygen which permeater through the plastic containier and is dissolved in the beverage, without affecting the beverage's sensory characteristics. The enzymatic complex may comprise mainly two enzymes: glucose-oxidase and catalase. The glucose-oxidase catalyzes the reaction of the oxygen with glucose, forming the gluconic acid and the hydrogen peroxide that is later consumed by catalase, forming water and half of the original oxygen. These two are chain reactions which occur until the total consumption of the oxygen.

The preservatives (B) preserve the beverage microbiologically. The following may be used as preservatives: alkyl p-hydroxibenzoic acid or esters derived thereof, as for example: methyl p-hydroxibenzoic acid ester, ethyl p-hydroxibenzoic acid ester, propyl p-hydroxibenzoic acid ester, butyl p-hydroxibenzoic acid ester, heptyl p-hydroxibenzoic acid ester and octyl p-hydroxibenzoic acid ester. All of them are more active against yeasts and bacteria, than the benzoic acid, and lower dosages can be used. Jointly, such preservatives have a total and synergistic action, preventing the multiplication of microorganisms mainly in this present invention where there is great interaction with the temperature.

By the use of this process way, it is possible to use lower temperatures, which compensates the plastic containers' lower resistance to normal pasteurization temperatures (2 - 10 min / 60 - 65°C), which would result in a permanent deformation due to the pressure inside the bottle and pasteurization temperatures.

Other food additives (C) may also, optionally, be added, like the antioxidants eritorbic acid and/or its salts and/or ascorbic acid and its salts, and also stabilizers known by brewers, as propylene glycol alginate.

The thermal treatment (D), due to the synergy with the formulation components, allows that products as beer, in example, may be microbiologically stabilized under less then 10 UPs (pasteurization units). Each pasteurization unit corresponds to a 1 minute , 60°C treatment.

The additives composition must be added separately from the enzymatic complex(es) at distinct points through the line.

At the scheme (I) a beer/draft beer production basic fluxograma is showed. The additives formulation dosage is obtained by a proportioning pump before the bottling machine in tunnel pateurization units.

Alternatively, (yet in a tunnel pateurization units) the addition may occur between the (7) and (8) positions, that means between the filtration and the stocking tanks. This alternative is capable to guarantee good concentration homogeneity to the formulation components.

The additives formulation dosage, may be also done during the filtration (7), in example, with the diatomaceous earth dosage.

Lines with heat exchangers (flash process) is very important to have the formulation addition before the liquid temperature begins to increase.

The additives formulation preparation must be done at high solubility means: ethylic alcohol, propylene glycol, glycerol or even under an alkaline pH.

The enzymatic complex must be added after the micro-filtration (if it exist). Depending on the type and characteristics of the beer the addition could be done after or before the heat exchangers, if they exist. At tunnel processes the complex dosage, may also occur between the (7) and (8) positions. Optionally the addition can be done before the packaging.

After the addition of the complete additive formulation, the product is able to undergo the thermal treatment at a tunnel or heat exchange process. No matter which type of thermal treatment, no more than 10 UPs is necessary to give microbiologic stability to the product. This UPs rate is easily obtained through time/temperature combinations in order to the use of containers not resistant to a conventional pasteurization.

To reach the Ups rate, we can use the approximate relation:

$$UP = T \times 1,393^{(t-60)}$$

T= time in minutes

t = temperature in centigrade

Due to the characteristics of the beverage in which the formulation proposed has been added, any type of container can be used: tin, glass, card or plastic materials; we can mention, for example, containers type PET, PEN, PVC, PP, PE, PC, PET/PEN blends, one or more polymer multilayers, etc.

Examples:

Example 1: Adopting a soft drink with 12% sugar, pH approximately equal to 3, with 2 to 3 volumes of carbonic gas and an initial yeast counting of <2000/100 ml, lactic bacteria < 10/100ml, total counting of mesophyllus < 2000/100ml and oxygen-labile flavours in a contents higher than 0.2 ppm (in relation to the mass of product) dissolved in the beverage, in a container allowing the passage of 0.6 ppm of oxygen in 24 hours. Adding (before the soft drink packaging) a group of additives comprising: methyl, propyl and heptyl paraben preservatives in the following concentrations: 100/100/5 ppm in relation to soft drink and with an oxygen consumption catalyzer, an enzymatic complex containing glucose-oxidase and catalase in the concentration of 100 ppm (1200 GOX unit), (1 GOX unit = amount of enzyme which at 21°C and pH 5.1, catalyses the formation of 1 μmole $H_2O_2$) - the product preserves its original characteristics, been maintained micro-biologically, physic-chemically and sensory stable during a period of up to 6 months of shelf-life.

Example 2: Adopting a natural grape juice with 18 BRIX, filtered, with initial counting of: yeasts < 1500/100ml, lactic bacteria < 20/100 ml, total counting of mesophillus < 2000/100 ml, sensitive to oxidation and to the growth of deteriorative microorganisms, it shall be preserved utilizing a mixed process of thermal treatment (30 minutes / 45°C) and methyl/propyl/heptyl parabens in concentrations of 150/50/6 ppm plus the addition of 20 ppm (1200 GOX unit) of an enzymatic complex containing glucose-oxidase and catalase, utilizing a plastic container having a permeability of 0.05 ppm of oxygen/24 h. The juice preserves its original flavour, taste and colour characteristics, without biological, physic-chemical and sensory modifications up to 12 months, when a process of introduction of additives is used, preferably before the thermal treatment of the juice.

Example 3: Adopting as example a filtered draft beer with the following characteristics: pH approximately 4, original dissolved oxygen < 0.25 ppm, 4% alcohol in volume, carbonation of 2.8 volumes of $CO_2$, initial microbial count:

of yeasts < 1000/100 ml, mesophyllus < 1500/100 ml, utilizing 40 ppm of the ascorbic acid as antioxidant and 40 ppm of propylene glycol alginate as stabilizer.

This product can be preserved, utilizing a process of introduction of a mixture of preservatives: methyl/propyl/heptyl parabens in concentrations of 250/200/3.5 ppm and an enzymatic complex of glucose-oxidase/catalase in a concentration of 50 ppm and 1200 GOX, prior to a thermal treatment of 40°C for 10 minutes, ideal condition for the activity of the enzymatic complex, the product maintains its original characteristics preserved for up to 6 months in containers which are impermeable to gas exchanges, or up to 4 months in plastic containers having an oxygen permeability of 0.09 ppm in 24 hours.

Example 4: Considering a beverage of the isotonic type, containing carbonates, phosphates, sodium, potassium, calcium, magnesium citrates, and having 5% of sugars (glucose and/or fructose and/or saccharose).

Packed in a container at 60°C with addition of methyl/propyl/heptyl parabens in concentrations of 150/75/4 ppm and 30 ppm of an enzymatic complex of glucose-oxidase/catalase (which 1200 GOX units, in example), this product maintains its initial sensory, chemical, physic-chemical and microbiological characteristics for a period of up to 12 months.

Example 5: Considering a vinegar containing 4% of volatile acidity expressed as acetic acid, filtered, having a pH equal to 2 with addition of a mixture of methyl/propyl/heptyl parabens preservatives, in concentrations of 100/50/4 ppm and 30 ppm of the glucose-oxidase/catalase enzymatic complex, the product maintains its original sensory, chemical, physic-chemical and microbiological characteristics for a period of up to 12 months, packed into plastic bottles with a 0.10 ppm oxygen (base product) permeability for 24 hours.

Taking, for example, the beer, after its filtration at low temperatures, two process lines can be followed, according to the manufacturing process, which are presented as follows:

Example 6: After the antioxidant addition, as for example vitamin C (until 40 ppm) and propylene glycol alginate (ETXXVI 40 - 80 ppm), which maintain the superficial tension broken by preservatives, the enzymatic complex and preservatives are introduced by dosing pump.

The enzymatic complex in a (1200 GOX units) 10 ppm concentration, based on glucose-oxidase and catalase, aims the consumption of the oxygen which permeates through the plastic container walls during its shelf-life.

But, the introduction of a group of preservatives: methyl p-hydroxibenzoic acid (200 ppm), propyl p-hydroxibenzoic acid (60 ppm), heptyl p-hydroxibenzoic acid (4 ppm), allied to a thermal treatment at 57°C for 20 minutes, aims to prevent the development of microorganisms.

Soon after the preservatives addition and before bottling, the beer carbonation is made with a carbonic gas overpressure around 2.8 kg/cm$^2$, in order to compensate losses due to gas permeation through the walls during the shelf-life.

After bottling and capping, the product's heat treatment is effected. The product is cooled, labelled and is ready to commercialization.

Example 7: After the antioxidant addition, as to example vitamin C (until 40 ppm) and propylene glycol alginate in the same concentrations of example 1, a "flash pasteurization" is made fot 30 seconds at 50 - 60°C. The beer is aseptically cooled and, soon after, the enzymatic complex is introduced (glucose oxidase/catalase : 12 ppm with 1200 GOX, for example), previously filtered (3 - 5 micra) to prevent contamination by microorganisms into the beer (with or without preservatives), associated to the introduction of a group of preservatives: methyl p-hydroxibenzoic acid (100 ppm), propyl p-hydroxibenzoic acid (20 ppm), heptyl p-hydroxibenzoic acid (2 ppm).

Then, the product goes to an aseptic storage tank at 10°C, being afterwards cold-bottled in plastic container produced with a polymer of the polyethylene naftalate type, having a permeability of 0.02 cm$^3$/container/day (measured by an equipment of the MOCON's OXTRAN 2/20 type).

The cap is placed and product labelled and the product is ready to commercialization.

**Claims**

1. Process for introduction of additives and coadjuvants for beer packaging in PET containers, wherein its formulation contains: (A) one or more enzymatic complexes comprising mainly glucose-oxidase and catalase; (B) one or more preservative agents and optionally, (C) other food additives associated to a post thermal treatment specifically developed (D) to be effective in the microbiological stabilization but sufficient mild in order to beware injuries to the plastic container and a maximum of 25 UP (pasteurization units, each pasteurization unit corresponds to a 1 minute, 60°C treatment) of intensity, and less then 10 UP preferentially , and less then 4 UP most preferentially.

2. Process for introduction of additives and coadjuvants for beer packaging in PET containers in accordance with claim 1, wherein dosing the additives and coadjuvants before the thermal treatment.

3. Process for introduction of additives and coadjuvants for <u>beer</u> packaging in <u>PET</u> containers <u>in accordance with claim 1</u>, wherein dosing the additives before the thermal treatment and the coadjuvants after it.

4. Process for introduction of additives and coadjuvants for <u>beer</u> packaging in <u>PET</u> containers <u>in accordance with claim 1</u>, wherein dosing the additives and coadjuvants during the filtration process.

5. Process for introduction of additives and coadjuvants for <u>beer</u> packaging in <u>PET</u> containers <u>in accordance with claim 1 and 4</u>, wherein dosing the coadjuvants after the sterile filtration (0,45 μm) process or micro filtration (0.6 - 0.8 μm).

6. Process for introduction of additives and coadjuvants for <u>beer</u> packaging in <u>PET</u> containers, in accordance with claim 1, wherein the substrate used with the enzymatic complex comprises mainly glucose and water.

7. Process for introduction of additives and coadjuvants for <u>beer</u> packaging in <u>PET</u> containers, in accordance with claim 1, wherein it contains 1 to 100 ppm of enzymatic complex.

8. Process for introduction of additives and coadjuvants for <u>beer</u> packaging in <u>PET</u> containers in accordance with claim <u>7</u>, wherein it contains, preferably, 1 to 40 ppm of enzymatic complex.

9. Process for introduction of additives and coadjuvants for <u>beer</u> packaging in plastic containers, in accordance with claim 1 , wherein the preservatives used are of the paraben family.

10. Process for introduction of additives and coadjuvants for <u>beer</u> packaging in <u>PET</u> containers in accordance with claim 1 <u>and 9</u>, wherein it contains as preservatives methyl, ethyl, propyl, butyl and octyl parabens in the following concentrations:

(a) from 0 to 600 ppm of methyl paraben and/or
(b) from 0 to 500 ppm of ethyl paraben and/or
(c) from 0 to 400 ppm of propyl paraben and/or
(d) from 0 to 200 ppm of butyl paraben and/or
(e) from 0 to 12 ppm ofheptyl paraben and/or
(f) from 0 to 8 ppm of octyl paraben

11. Process for introduction of additives and coadjuvants for <u>beer</u> packaging in <u>PET</u> containers, in accordance with claim 1 <u>and 9</u>, wherein it contains as preservatives methyl, propyl and heptyl parabens preferably in the following concentrations:

(a) from 0 to 600 ppm of methyl paraben
(b) from 5 to 300 ppm of propyl paraben
(c) from 0.2 to 12 ppm of heptyl paraben

12. Process for introduction of additives and coadjuvants for <u>beer</u> packaging in <u>PET</u> containers, in accordance with claim 1 <u>and 9,</u> wherein it contains as preservatives methyl, propyl and heptyl parabens, more preferentially, in the following concentrations:

(a) from 10 to 250 ppm of methyl paraben
(b) from 5 to 150 ppm of propyl paraben
(c) from 0.2 to 5 ppm of heptyl paraben

13. Process for introduction of additives and coadjuvants for <u>beer</u> packaging in <u>PET</u> containers, in accordance with claim 1, wherein it contains other antioxidant and stabilizing additives.

14. Process for introduction of additives and coadjuvants for <u>beer</u> packaging in <u>PET</u> containers, in accordance with claim 1, wherein the preserved beverage, preferentially, is packed in plastic packaging of the type PET, <u>polyehytlene terephthalate homopolymers or copolymers, or blends</u>, PET/PEN blends moulded as one or more polymer multilayers form or other permeable container type.

**Patentansprüche**

1. Verfahren zum Einbringen von Zusatzstoffen und Co-Adjuvantien zur Verpackung von Bier in PET-Behältern, worin seine Formulierung enthält: (A) einen oder mehrere Enzymkomplexe, die hauptsächlich Glucoseoxidase und Katalase umfassen; (B) ein oder mehrere Konservierungsmittel und wahlweise (C) andere Nahrungsmittelzusatzstoffe in Verbindung mit einer Wärmenachbehandlung (D), welche speziell dafür entwickelt wurde, die mikrobiologische Stabilisierung zu bewirken, jedoch mild genug zu sein, um Beschädigungen des Kunststoffbehälters zu vermeiden, und einer maximalen Stärke von 25 PU (Pasteurisierungseinheiten, wobei jede Pasteurisierungseinheit einer Behandlung von 1 Minute, 60°C entspricht) und vorzugsweise weniger als 10 PU und höchst bevorzugt weniger als 4 PU.

2. Verfahren zum Einbringen von Zusatzstoffen und Co-Adjuvantien zur Verpackung von Bier in PET-Behältern nach Anspruch 1, worin die Zudosierung der Zusatzstoffe und Co-Adjuvantien vor der Wärmebehandlung erfolgt.

3. Verfahren zum Einbringen von Zusatzstoffen und Co-Adjuvantien zur Verpackung von Bier in PET-Behältern nach Anspruch 1, worin die Zusatzstoffe vor der Wärmebehandlung und die Co-Adjuvantien nach dieser zudosiert werden.

4. Verfahren zum Einbringen von Zusatzstoffen und Co-Adjuvantien zur Verpackung von Bier in PET-Behältern nach Anspruch 1, worin die Zudosierung der Zusatzstoffe und Co-Adjuvantien während des Filtrationsprozesses erfolgt.

5. Verfahren zum Einbringen von Zusatzstoffen und Co-Adjuvantien zur Verpackung von Bier in PET-Behältern nach Anspruch 1 und 4, worin die Zudosierung der Co-Adjuvantien nach dem Prozeß der Sterilfiltration (0,45 μm) oder der Mikrofiltration (0,6 - 0,8 μm) erfolgt.

6. Verfahren zum Einbringen von Zusatzstoffen und Co-Adjuvantien zur Verpackung von Bier in PET-Behältern nach Anspruch 1, worin das mit dem Enzymkomplex verwendete Substrat hauptsächlich Glucose und Wasser umfaßt.

7. Verfahren zum Einbringen von Zusatzstoffen und Co-Adjuvantien zur Verpackung von Bier in PET-Behältern nach Anspruch 1, worin dieses 1 bis 100 ppm Enzymkomplex enthält.

8. Verfahren zum Einbringen von Zusatzstoffen und Co-Adjuvantieri zur Verpackung von Bier in PET-Behältern nach Anspruch 7, worin dieses vorzugsweise 1 bis 40 ppm Enzymkomplex enthält.

9. Verfahren zum Einbringen von Zusatzstoffen und Co-Adjuvantien zur Verpackung von Bier in PET-Behältern nach Anspruch 1, worin die verwendeten Konservierungsstoffe aus der Paraben-Familie stammen.

10. Verfahren zum Einbringen von Zusatzstoffen und Co-Adjuvantien zur Verpackung von Bier in PET-Behältern nach Anspruch 1 und 9, worin dieses als Konservierungsstoffe Methyl-, Ethyl-, Propyl-, Butyl- und Octylparaben in den folgenden Konzentrationen enthält:

   (a) 0 bis 600 ppm Methylparaben und/oder
   (b) 0 bis 500 ppm Ethylparaben und/oder
   (c) 0 bis 400 ppm Propylparaben und/oder
   (d) 0 bis 200 ppm Butylparaben und/oder
   (e) 0 bis 12 ppm Heptylparaben und/oder
   (f) 0 bis 8 ppm Octylparaben.

11. Verfahren zum Einbringen von Zusatzstoffen und Co-Adjuvantien zur Verpackung von Bier in PET-Behältern nach Anspruch 1 und 9, worin dieses als Konservierungsstoffe Methyl-, Propyl- und Heptylparaben vorzugsweise in den folgenden Konzentrationen enthält:

   (a) 0 bis 600 ppm Methylparaben
   (b) 5 bis 300 ppm Propylparaben
   (c) 0,2 bis 12 ppm Heptylparaben

12. Verfahren zum Einbringen von Zusatzstoffen und Co-Adjuvantien zur Verpackung von Bier in PET-Behältern nach Anspruch 1 und 9, worin dieses als Konservierungsstoffe Methyl-, Propyl- und Heptylparaben bevorzugter in den folgenden Konzentrationen enthält:

(a) 10 bis 250 ppm Methylparaben
(b) 5 bis 150 ppm Propylparaben
(c) 0,2 bis 5 ppm Heptylparaben

**13.** Verfahren zum Einbringen von Zusatzstoffen und Co-Adjuvantien zur Verpackung von Bier in PET-Behältern nach Anspruch 1, worin dieses weitere Antioxidantien und stabilisierende Zusatzstoffe enthält.

**14.** Verfahren zum Einbringen von Zusatzstoffen und Co-Adjuvantien zur Verpackung von Bier in PET-Behältern nach Anspruch 1, worin das haltbar gemachte Getränk vorzugsweise in eine Kunststoffverpackung von der Art des PET, der Polyethylentherephthalat-Homopolymere oder -Copolymere oder -Blends, der PET/PEN-Blends, die als ein oder mehrere Polymer-Multilayer oder als andere permeable Behälterart geformt ist, abgepackt wird.

**Revendications**

**1.** Procédé d'introduction d'additifs et de coadjuvants pour le conditionnement de la bière dans des conteneurs en PET, dans lequel la formulation contient : (A) un ou plusieurs complexes enzymatiques comprenant principalement une glucose-oxydase et une catalase ; (B) un ou plusieurs agents conservateurs et éventuellement, (C) d'autres additifs alimentaires associés à un traitement thermique postérieur développé spécifiquement (D) pour être efficace dans la stabilisation microbiologique mais suffisamment léger pour préserver le conteneur en plastique de détériorations en appliquant une intensité maximale de 25 UP (unités de pasteurisation, chaque unité de pasteurisation correspond à un traitement de 1 minute à 60°C), de préférence inférieure à 10 UP, et de manière préférée entre toutes inférieure à 4 UP.

**2.** Procédé d'introduction d'additifs et de coadjuvants pour le conditionnement de la bière dans des conteneurs en PET selon la revendication 1, dans lequel l'adjonction ou dosage des additifs et des coadjuvants a lieu avant le traitement thermique.

**3.** Procédé d'introduction d'additifs et de coadjuvants pour le conditionnement de la bière dans des conteneurs en PET selon la revendication 1, dans lequel le dosage des additifs a lieu avant le traitement thermique et celui des coadjuvants a lieu après le traitement thermique.

**4.** Procédé d'introduction d'additifs et de coadjuvants pour le conditionnement de la bière dans des conteneurs en PET selon la revendication 1, dans lequel le dosage des additifs et des coadjuvants a lieu durant le processus de filtration.

**5.** Procédé d'introduction d'additifs et de coadjuvants pour le conditionnement de la bière dans des conteneurs en PET selon les revendications 1 et 4, dans lequel le dosage des coadjuvants a lieu après le processus de filtration stérile (0,45 µm) ou la microfiltration (0,6 à 0,8 µm).

**6.** Procédé d'introduction d'additifs et de coadjuvants pour le conditionnement de la bière dans des conteneurs en PET, selon la revendication 1, dans lequel le substrat utilisé avec le complexe enzymatique comprend principalement du glucose et de l'eau.

**7.** Procédé d'introduction d'additifs et de coadjuvants pour le conditionnement de la bière dans des conteneurs en PET, selon la revendication 1, qui contient de 1 à 100 ppm de complexe enzymatique.

**8.** Procédé d'introduction d'additifs et de coadjuvants pour le conditionnement de la bière dans des conteneurs en PET selon la revendication 7, qui contient, de préférence, de 1 à 40 ppm de complexe enzymatique.

**9.** Procédé d'introduction d'additifs et de coadjuvants pour le conditionnement de la bière dans des conteneurs en plastique, selon la revendication 1, dans lequel les conservateurs utilisés sont de la famille des parabène.

**10.** Procédé d'introduction d'additifs et de coadjuvants pour le conditionnement de la bière dans des conteneurs en PET selon les revendications 1 et 9, qui contient, comme conservateurs, des parabène de méthyle, d'éthyle, de propyle, de butyle et d'octyle selon les concentrations suivantes :

(a) de 0 à 600 ppm de méthylparabène et/ou
(b) de 0 à 500 ppm d'éthylparabène et/ou
(c) de 0 à 400 ppm de propylparabène et/ou
(d) de 0 à 200 ppm de butylparabène et/ou
(e) de 0 à 12 ppm d'heptylparabène et/ou
(f) de 0 à 8 ppm d'octylparabène.

**11.** Procédé d'introduction d'additifs et de coadjuvants pour le conditionnement de la bière dans des conteneurs en PET, selon les revendications 1 et 9, qui contient, comme conservateurs, des parabène de méthyle, de propyle et d'heptyle, de préférence selon les concentrations suivantes :

(a) de 0 à 600 ppm de méthylparabène,
(b) de 5 à 300 ppm de propylparabène,
(c) de 0,2 à 12 ppm d'heptylparabène.

**12.** Procédé d'introduction d'additifs et de coadjuvants pour le conditionnement de la bière dans des conteneurs en PET, selon les revendications 1 et 9, qui contient, comme conservateurs, des parabène de méthyle, de propyle et d'heptyle, de préférence selon les concentrations suivantes :

(a) de 10 à 250 ppm de méthylparabène,
(b) de 5 à 150 ppm de propylparabène,
(c) de 0,2 à 5 ppm d'heptylparabène.

**13.** Procédé d'introduction d'additifs et de coadjuvants pour le conditionnement de la bière dans des conteneurs en PET, selon la revendication 1 qui contient d'autres additifs antioxydants et stabilisants.

**14.** Procédé d'introduction d'additifs et de coadjuvants pour le conditionnement de la bière dans des conteneurs en PET, selon la revendication 1, dans lequel la boisson contenant des conservateurs est, de préférence, conditionnée dans un emballage en plastique du type PET, homopolymères ou copolymères du polyéthylène téréphtalate, ou mélanges, mélanges de PET/PEN moulés sous forme d'une ou plusieurs multicouches de polymère ou autre type de conteneur perméable.